Europäisches Patentamt

European Patent Office

Office européen des brevets

(11) Veröffentlichungsnummer: **0 304 594**
**A2**

(12) # EUROPÄISCHE PATENTANMELDUNG

(21) Anmeldenummer: 88111083.7

(51) Int. Cl.⁴: **B62D 11/10**

(22) Anmeldetag: 12.07.88

(30) Priorität: 24.08.87 DE 3728171

(43) Veröffentlichungstag der Anmeldung:
01.03.89 Patentblatt 89/09

(84) Benannte Vertragsstaaten:
DE FR GB IT

(71) Anmelder: **RENK AKTIENGESELLSCHAFT**
**Gögginger Strasse 73**
**D-8900 Augsburg(DE)**

(72) Erfinder: **Zaunberger, Franz-Xaver**
**Zieglerstrasse 10**
**D-8900 Augsburg 22(DE)**

(54) **Elektrische-mechanische Antriebsanlage für ein Vollkettenfahrzeug.**

(57) Ein Elektromotor (2) treibt über eine Differential-getriebeanordnung (28,34) die Kettenantriebsräder (48, 54) der Fahrketten (50,56) eines Vollkettenfahr-zeuges. Die Lenkung des Vollkettenfahrzeuges er-folgt durch einen weiteren Elektromotor (4), durch welchen je nach Fahrtrichtung des Vollkettenfahrzeu-ges der Differentialgetriebeanordnung mit verschie-denen Drehzahlen eine Drehzahl überlagerbar ist. Die Stromversorgung des Fahrelektromotors (2) und des Lenkelektromotors (4) erfolgt über eine Steuer- und Regeleinrichtung (6) in Abhängigkeit von Ein-stellungen eines Fahrorgans (8) und eines Lenkor-gans (10) von einem elektrischen Generator (12), welcher von einem Dieselmotor (14) angetrieben wird.

FIG.1

# Elektrische-mechanische Antriebsanlage für ein Vollkettenfahrzeug

Die Erfindung betrifft eine elektrische-mechanische Antriebsanlage für ein Vollkettenfahrzeug mit einem Fahrmotor,
mindestens einer Lenkantriebseinheit,
einer Differentialgetriebeanordnung,
einer Fahrantriebsverbindung zwischen Fahrmotor und einem Fahrantriebselement der Differentialgetriebeanordnung,
einer Lenkantriebsverbindung zwischen der Lenkantriebseinheit und einem Lenkantriebselement der Differentialgetriebeanordnung,
zwei Antriebsausgängen an der Differentialgetriebeanordnung zum Antrieb von Kettenantriebsrädern des Vollkettenfahrzeugs.

Aus der DE-PS 21 14 951 ist eine rein mechanische Antriebsanlage nach der im Oberbegriff von Anspruch 1 angegebenen Art bekannt. Der antreibende Motor ist normalerweise ein Dieselmotor. Von ihm geht eine Fahrantriebsverbindung, welche ein Gangschaltgetriebe enthält, zu Fahrantriebselementen von zwei Differentialgetrieben in Form von zwei Planetengetrieben. Ferner geht vom Fahrmotor eine Lenkantriebsverbindung, welcher eine Lenkantriebseinheit enthält, zu Lenkantriebselementen der beiden Differentialgetriebe. Anstelle der mechanischen Lenkantriebseinheit sind auch hydraulische Lenkantriebseinheiten bekannt. Ferner sind auch diesel-elektrische Antriebsanlagen bekannt. Bei diesen diesel-elektrischen Antriebsanlagen hat jedes Kettenantriebsrad je einen eigenen Elektromotor mit einem Untersetzungsgetriebe. Der Strom für diese Elektromotoren wird von einem Generator erzeugt, welcher von einem Dieselmotor angetrieben wird. Bei Kurvenfahrt des Kettenfahrzeugs benötigt die äußere Fahrzeugkette wesentlich mehr Leistung als die innere Fahrzeugkette. Dies hat bei der bekannten diesel-elektrischen Antriebsanlage den Nachteil, daß die bei der Kurvenfahrt auftretenden Blindleistungen, in Form eines Leistungstransfers von der inneren Fahrzeugkette zur äußeren Fahrzeugkette, auf elektrischem Wege übertragen werden müssen. Dies erfordert über die maximale erforderliche Antriebsleistung hinausgehende größer dimensionierte Elektromotoren auf jeder Fahrzeugseite und einen erhöhten Aufwand in der Steuer- und Regeleinrichtung der Antriebsanlage. Die Drehzahlen und Drehmomente der Kettenantriebsräder müssen in Abhängigkeit von der jeweiligen Stellung des Fahrpedals bzw. Gaspedals und des Lenkrads unter den ständig wechselnden äußeren Einflüssen geregelt werden. Solche äußeren Einflüsse sind insbesondere die ständig wechselnde Beschaffenheit des Bodens, auf welchem das Kettenfahrzeug fährt, sowie die häufigen Bewegungen am Lenkrad des Kettenfahrzeugs.

Durch die Erfindung soll die Aufgabe gelöst werden, eine Antriebsanlage zu schaffen, bei welcher der Umfang an mechanischen Getrieben und hydraulischen Einrichtungen gegenüber den bekannten mechanischen und mechanisch-hydraulischen Antriebsanlagen wesentlich reduziert ist, gleichzeitig aber auch große Elektromotoren vermieden werden, welche weit über die reine Fahrantriebsleistung hinaus überdimensioniert sind.

Diese Aufgabe wird gemäß der Erfindung dadurch gelöst, daß der Fahrmotor ein Elektromotor ist, daß die Lenkantriebseinheit ein Elektromotor ist, und daß der Fahrelektromotor und der Lenkelektromotor von einem Generator, der von einem Verbrennungsmotor antreibbar ist, mit elektrischer Energie versorgbar sind.

Das Lösungsprinzip der Erfindung besteht in der Kombination von elektrischen Motoren und mechanischen Getrieben in der Weise, daß der Leistungstransfer zwischen den Kettenantriebsrädern von der einen auf die andere Fahrzeugseite nicht elektrisch erfolgt, sondern mechanisch, daß jedoch die Antriebsleistung und die Lenkleistung von Elektromotoren erzeugt wird. Ein Leistungstransfer von einem Kettenantriebsrad auf der einen Fahrzeugseite zu einem Kettenantriebsrad auf der anderen Fahrzeugseite findet nicht nur bei Kurvenfahrt statt, sondern auch, wenn sich die Fahrzeugketten auf schwierigem Geländeboden, beispielsweise in Fahrrinnen, festgesetzt haben und sich vom Geländeboden losreißen müssen, wozu höchste Antriebsleistung und/oder Lenkleistung vom Fahrzeugmotor erforderlich ist. Gemäß der Erfindung sind deshalb getrennte Elektromotoren für für den Fahrantrieb und für den Lenkantrieb in Kombination mit mindestens einem Differentialgetriebe vorgesehen. Dadurch wird vermieden, daß Blindleistungen über die elektrischen Anlagen fließen, also über die Elektromotoren. Gemäß der Erfindung werden diese Blindleistungen vom mechanischen Teil der Getriebeanordnung, also von der Differentialgetriebeanordnung, zwischen den beiden Fahrzeugseiten übertragen. Die für die Antriebsanlage erforderliche Steuer- und Regeleinrichtung wird dadurch wesentlich einfacher, da durch die Erfindung jedem Elektromotor nur eine Funktion "Fahren" oder "Lenken" zugeordnet ist. Außerdem hat die Antriebsanlage nach der Erfindung den Vorteil, daß die von bekannten mechanischen oder mechanisch-hydraulischen, insbesondere hydrodynamisch-mechanischen Antriebsanlagen bekannten Elemente in gleicher Weise auch bei der erfindungsgemäßen Antriebsanlage verwendet werden können. Insbesondere können in die erfindungsgemäße Antriebsanlage auch bekannte Untersetzungsgetriebe und Schaltgetriebe und Kombinationsbremssysteme, insbesondere die Kombination von mechanischen und hydraulischen Bremsen, integriert werden.

Weitere Merkmale der Erfindung sind in den Unteransprüchen enthalten.

Die Erfindung wird im folgenden mit Bezug auf die beiliegenden Zeichnungen anhand von bevorzugten Ausführungsformen beschrieben. Die Zeichnungen zeigen:

Fig. 1 eine schematische Draufsicht auf eine elektrische-mechanische Antriebsanlage für ein Vollkettenfahrzeug nach der Erfindung,

Fig. 2 eine schematische Draufsicht auf eine weitere Ausführungsform einer elektrisch-mechanischen Antriebsanlage für ein Vollkettenfahrzeug nach der Erfindung,

Fig. 3 eine schematische Draufsicht auf eine weitere Ausführungsform nach der Erfindung,

Fig. 4 eine schematische Draufsicht auf eine weitere Ausführungsform nach der Erfindung,

Fig. 5 eine schematische Draufsicht auf eine weitere Ausführungsform nach der Erfindung, und

Fig. 6 eine schematische Draufsicht auf eine nochmals weitere Ausführungsform nach der Erfindung.

Die Erfindung betrifft eine elektrische-mechanische Antriebsanlage für ein Vollkettenfahrzeug. "Vollkettenfahrzeug" im englischen "tracked vehicles" genannt, sind Kettenfahrzeuge, z. B. Panzer, welche nicht auf Rädern, sondern auf Ketten fahren, und welche dadurch Kurven fahren können, daß die Fahrkette auf der einen Fahrzeugseite mit einer anderen Geschwindigkeit angetrieben wird als die Fahrkette auf der anderen Fahrzeugseite. Hierzu müssen der Fahrantriebseinrichtung Fahrzeuglenkbefehle überlagert werden. Solche Antriebsanlagen sind beispielsweise aus der DE-PS 21 14 951 und US-PS 4 280 579 bekannt. Auf diese wird hiermit ausdrücklich verwiesen, so daß sich eine detaillierte Beschreibung des Über lagerungs-Lenk-Prinzips erübrigt.

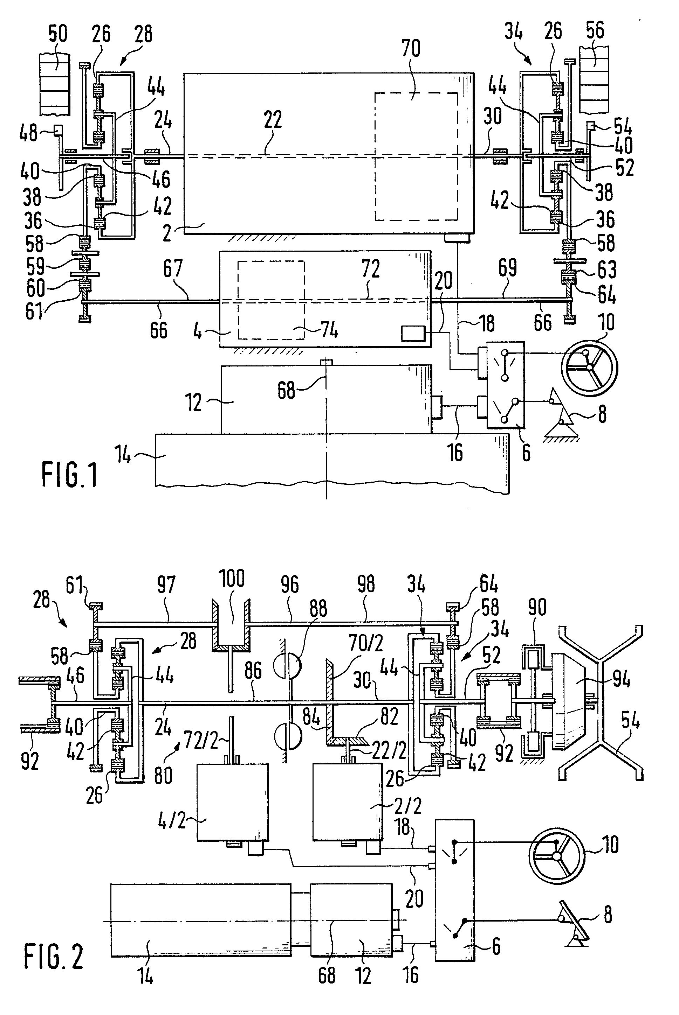

Die in Fig. 1 dargestellte elektrische-mechanische Antriebsanlage für ein Vollkettenfahrzeug nach der Erfindung enthält einen Fahrelektromotor 2 und einen Lenkelektromotor 4, welche über eine Steuer- und Regeleinrichtung 6 in Abhängigkeit von Einstellungen eines Fahrpedals 8 und eines Lenkorgans 10 von einem elektrischen Generator 12 mit elektrischer Energie versorgt und dadurch gesteuert und geregelt werden. Der Generator 12 wird von einem Verbrennungsmotor 14, vorzugsweise ein Dieselmotor, angetrieben. Die Steuer- und Regeleinrichtung 6 ist über elektrische Leitungen 16 mit dem Generator 12, über elektrische Leitungen 18 mit dem Fahrelektromotor 2, und über elektrische Leitungen 20 mit dem Lenkelektromotor 4 verbunden. Eine Welle 22 des Fahrelektromotors 2 ist über einen, mit Bezug auf Fig. 1 linken, Wellenabschnitt 24 mit dem Hohlrad 26 eines, mit Bezug auf Fig. 1 linken, Differentialgetriebes 28 verbunden, und außerdem über einen, mit Bezug auf Fig. 1 rechten, Wellenabschnitt 30 mit einem Hohlrad 26 eines, mit Bezug auf Fig. 1 rechten, Differentialgetriebes 34. Die Wellenabschnitte 24 und 30 bilden somit eine Fahrantriebsverbindung zu den Fahrantriebselementen in Form von Hohlrädern 26 der Differentialgetriebeanordnung 28, 34. Zwischen einem Innenzahnkranz 36 der Hohlräder 26 und einem Außenzahnkranz 38 eines inneren Sonnenrades 40 befinden sich jeweils damit in Eingriff stehende Planetenräder 42, die an einem Planetenträger 44 drehbar gelagert sind. Die Planetenträger 44 der beiden Differentialgetriebe 28 und 34 sind Antriebsausgänge der Differentialgetriebeanordnung 28, 34, welche über eine, mit Bezug auf Fig. 1 linke, Ausgangswelle 46 mit einem linken Kettenantriebsrad 48 zum Antrieb einer linken Fahrkette 50, und über eine rechte Ausgangswelle 52 mit einem rechten Kettenantriebsrad 54 zum Antrieb einer rechten Fahrkette 56 des Kettenfahrzeuges verbunden sind. Die Drehzahl der als Antriebsausgänge dienenden Planetenträger 44, und damit auch die Geschwindigkeit der Fahrketten 50 und 56, ist nicht nur von der Drehzahl der Hohlräder 26, sondern auch von der Drehzahl der Sonnenräder 40 abhängig. Die Sonnenräder 40 sind mit einem zu ihnen koaxialen Zahnrad 58 versehen. Das Zahnrad 58 des linken Differentialgetriebes 28 ist über drei Zahnräder 59,60,61, und das Zahnrad 58 des rechten Differentialgetriebes 34 ist über zwei Zahnräder 63,64 jeweils mit einer Nullwelle 66 verbunden. Der Lenkelektromotor 4 ist koaxial auf der Nullwelle 66 angeordnet und hält diese im Stillstand, wenn die Fahrketten 50 und 56 für eine Geradeausfahrt des Vollkettenfahrzeuges mit gleicher Geschwindigkeit angetrieben werden. Damit das Kettenfahrzeug eine Kurve fahren kann, treibt der Fahrelektromotor 4 die Nullwelle 66 je nachdem, ob das Fahrzeug eine Linkskurve oder eine Rechtskurve fährt, in der einen oder in der anderen Drehrichtung an. Da die Anzahl der Zahnräder 58,59,60 und 61 auf der linken Seite eine andere ist als die Anzahl der Zahnräder 58,63,64 auf der rechten Seite, wird die Antriebsdrehrichtung der Nullwelle 66 in zueinander entgegengesetzten Drehrichtungen auf die Sonnenräder 40 der beiden Differentialgetriebe 28 und 34 übertragen. Dadurch wird bei Kurvenfahrt die eine Fahrkette, z.B. 50, verzögert und die andere Fahrkette, z.B. 56, beschleunigt, oder umgekehrt, je nach Kurvenrichtung. Der Fahrelektromotor 2 ist koaxial auf der Welle 22 und damit koaxial zur Drehachse der als Antriebsausgänge dienenden Plane tenträger 44, und außerdem achsparallel neben dem Lenkelektromotor 4 angeordnet. Die Drehachse 68 des Generators 12 und des Verbrennungsmotors 14 ist rechtwinkelig zu den Drehachsen der Nullwelle 66 und der Planetenträger 44 angeordnet.

Gemäß einer abgewandelten Ausführungsform von Fig. 1 kann die Welle 22 des Fahrantriebsmotors 2 über ein Untersetzungsgetriebe oder über ein Gangschaltgetriebe 70 mit den Wellenabschnitten 24 und 30 verbunden sein. Ferner kann die Welle 72 des Lenkelektromotors 4 über ein Untersetzungsgetriebe 74 mit der Nullwelle 66 verbunden sein. Die Getriebe 70 und 74 sind in Fig. 1 in gestrichelten Linien schematisch dargestellt.

Bei diesen Ausführungsformen der Antriebsanlage nach der Erfindung sind der elektrische Generator 12 und der Fahrelektromotor 2 für eine Dauerleistung ausgelegt, die gleich der Dauerleistung des Verbrennungsmotors 14 ist. Der Lenkelektromotor 4 braucht nicht für eine so hohe Dauerleistung ausgebildet zu sein, sondern es genügt, wenn er nur für eine Kurzzeitleistung zwischen 60% und 100% der Dauerleistung des Fahrelektromotors 2 ausgelegt ist, je nach Art des Vollkettenfahrzeuges. Weder der Fahrelektromotor 2 noch der Lenkelektromotor 4 brauchen für übergroße Leistungen für extreme Fahrzustände ausgebildet zu sein. Die Drehzahl und/oder das Drehmoment des Fahrelektromotors 2 wird abhängig von der jeweiligen Einstellung des Fahrpedals 8 gesteuert. Die Drehzahl und/oder das Drehmoment des Lenkelektromotors 4 wird in Abhängigkeit von der jeweiligen Einstellung des Lenkorgans 10 gesteuert. Bei Geradeausfahrt des Vollkettenfahrzeuges wird der Lenkelektromotor 4 bei der Drehzahl Null, also im Stillstand, elektrisch stabilisiert. Bei Kurvenfahrt des Vollkettenfahrzeuges findet ein Leistungstransfer von der inneren Fahrkette, z.B. 50, zur äußeren Fahrkette, z.B. 56, statt. Die bei diesem Leistungstransfer übertragene Leistung wird als "Blindleistung" bezeichnet, und fließt gemäß der Erfindung über den mechanischen Teil der Antriebsanlage, nicht jedoch über den elektrischen Teil. Dadurch können die elektrischen Teile, also der Fahrelektromotor 2 und der Lenkelektromotor 4 für kleinere Leistungen ausgebildet werden als bei einer Antriebsanlage, bei welcher die Blindleistung über die elektrischen Teile von der inneren Fahrkette zur äußeren Fahrkette transferiert wird. "Blindleistung" ist die Leistung, die in bestimmten Fahrzuständen bei Verzögerung einer Fahrkette 50 frei wird und auf die Fahrkette 56 auf der anderen Seite übertragen wird.

Bei der Ausführungsform nach Fig. 1 bilden die Nullwelle 66 und die Welle 72 des Lenkelektromotors 4 einen einzigen Wellenstrang. Dieser Wellenstrang kann dadurch gebildet sein, daß die Welle 72 des Lenkelektromotors 4 als Hohlwelle ausgebildet und die Nullwelle 66 durch sie hindurchgeführt und mit ihr verbunden ist, oder dadurch, daß die Nullwelle 66 aus zwei Abschnitten 67 und 69 besteht, von welchen der eine am einen Ende und der andere am anderen Ende der Welle 72 des Lenkantriebsmotors 4 befestigt ist.

In ähnlicher Weise kann die Welle 22 des Fahrelektromotors 2 eine Hohlwelle sein und die Wellenabschnitte 24 und 30 Bestandteil einer einstückigen durch die hohle Welle 22 hindurchgeführten Welle sein, oder die Wellenabschnitte 24 und 30 können durch getrennte Wellen gebildet sein, die jeweils mit der Welle 22 des Fahrantriebsmotors 2 verbunden sind. Die Verbindung kann jeweils direkt oder über ein Getriebe erfolgen, beim Fahrelektromotor 2 über das Getriebe 70 oder beim Lenkelektromotor 4 über das Getriebe 74.

In den Zeichnungen sind einander entsprechende Teile jeweils mit gleichen Bezugszahlen versehen. Die Teile der einzelnen Figuren werden im folgenden nur so weit beschrieben, wie sie nicht bereits mit Bezug auf eine andere Figur beschrieben wurden.

Bei der in Fig. 2 dargestellten elektrisch-mechanischen Antriebsanlage sind der Fahrelektromotor 2/2 und der Lenkelektromotor 4/2 mit ihren Wellen 22/2 und 72/2 rechtwinkelig zu den Drehachsen der die Antriebsausgänge bildenden Planetenträger 44 und deren Ausgangswellen 46 und 52 in einem Zwischenraum 80 zwischen den beiden Differentialgetrieben 28 und 34 angeordnet. Der elektrische Generator 12 und der ihn antreibende Verbrennungsmotor 14 sind rechtwinkelig zur Welle 22/2 des Fahrelektromotors 22/2 und der Welle 72/2 des Lenkelektromotors 4/2 und damit parallel zu den Drehachsen der Planetenträger 44 angeordnet. Die Welle 22/2 des Fahrelektromotors 2/2 ist über Kegelräder 82 und 84 des Getriebes 70/2, welches ein Untersetzungsgetriebe ist, mit einer Hauptwelle 86 antriebsmäßig verbunden, deren Endabschnitte 24 und 30 mit den Hohlrädern 26 der beiden Differentialgetriebe 28 und 34 antriebsmäßig verbunden sind und axial in deren Drehachse angeordnet sind. Auf der Hauptwelle 86 ist eine hydrodynamische Strömungsbremse 88 angeordnet, welche in Kombination mit mechanischen Bremsen 90 Bestandteil eines Bremssystems ist, wie es in der DE-PS 21 14 951 beschrieben ist und welches zum Bremsen des Vollkettenfahrzeuges dient. Die Ausgangswellen 46 und 52 sind jeweils über eine mechanische Kupplung 92 und ein Untersetzungsgetriebe 94 mit den Antriebsrädern 48 und 54 für die Fahrketten antriebsmäßig verbunden. Die mechanischen Bremsen befinden sich auf jeder Fahrzeugseite jeweils zwischen der Kupplung 92 und dem Untersetzungsgetriebe 94. Eine Nullwelle 96 ist eine sogenannte "geteilte Nullwelle", welche aus zwei Nullwellenabschnitten 97 und 98 besteht, welche über ein zwischen ihnen angeordnetes Wendegetriebe 100 antriebsmäßig miteinander verbunden und von der Welle 72/2 des Lenkantriebsmotors 4/2 im Stillstand gehalten oder in entgegengesetzten Drehrichtungen zueinander angetrieben werden, je nach Fahrtrichtung des Vollkettenfahrzeuges. Dadurch, daß die Nullwellenabschnitte 97 und 98 jeweils in entgegengesetzten Drehrichtungen zueinander angetrieben werden, ist bei dieser Ausführungsform nach Fig. 2, im Gegensatz zu Fig. 1, die Anzahl der Zahnräder 61 und 58 auf der linken Seite und 64 und 58 auf der rechten Seite des Vollkettenfahrzeuges gleich groß, mit welcher die Nullwellenabschnitte 97 und 98 mit dem Sonnenrad 40 der beiden Differentialgetriebe 28 und 34 antriebsmäßig verbunden sind. Dadurch wird, wie bei der Ausführungsform nach Fig. 1, bei einer Kurvenfahrt die bezüglich des Fahrkurvenradius innen gelegene Fahrkette, z.B. 50, mit reduzierter Geschwindigkeit und die außen gelegene Fahrkette, z.B. 56, mit erhöhter Geschwindigkeit angetrieben.

Auch bei dieser Ausführungsform sind der elektrische Generator 12 und der Fahrelektromotor 2/2 für eine Dauerleistung gleich dem Verbrennungsmotor 14 ausgebildet. Der Lenkelektromotor 4/2 ist nur für eine Kurzzeitleistung, je nach Art des Vollkettenfahrzeuges, zwischen 60% und 100% der Dauerleistung des Verbrennungsmotors 14 ausgebildet. Eine Ausbildung für Leistungen, die über den normalen Fahr- und Lenkbetrieb hinausgehen, ist nicht erforderlich.

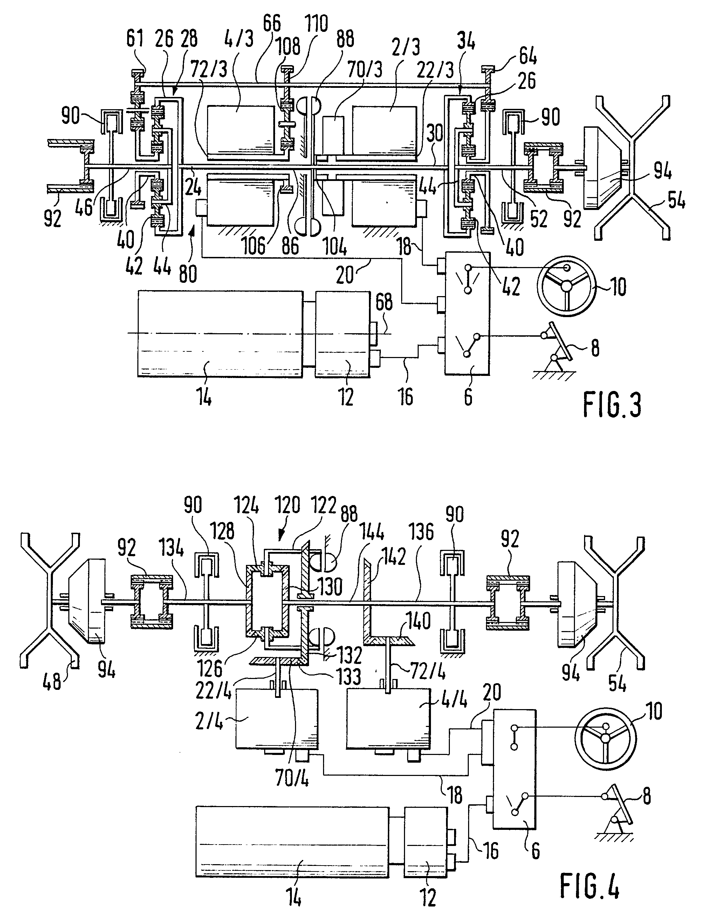

Fig. 3 zeigt eine Ausführungsform nach dem gleichen Funktionsprinzip wie die Ausführungsformen nach den Fig. 1 und 2. Dabei enthält die Ausführung nach Fig. 3 ähnlich wie Fig. 1 eine einteilige Nullwelle 66 und ähnlich wie Fig. 2 eine auf der Hauptwelle 86 befestigte hydrodynamische Strömungsbremse 88, mechanische Bremsen 90, welche hier auf den Ausgangswellen 46 und 52 angeordnet sind, und Kupplungen 92, über welche die Ausgangswellen 46 und 52 über Untersetzungsgetriebe 94 mit den Kettenantriebsrädern 48 und 54 verbunden sind. Die Nullwelle 66 ist auf der linken Fahrzeugseite über Zahnräder 61, 59 und 58 mit dem Sonnenrad 40 des linken Differentialgetriebes 28, und auf der rechten Fahrzeugseite über Zahnräder 64 und 58 mit dem Sonnenrad 40 des rechten Differentialgetriebes 34 antriebsmäßig verbunden. Ein konstruktiv wesentlicher Unterschied besteht darin, daß bei der Ausführungsform nach Fig. 3 der Fahrelektromotor 2/3 und der Lenkelektromotor 4/3 axial hintereinander koaxial um die Hauptwelle 86 herum angeordnet sind, in dem Zwischenraum 80 zwischen den beiden Differentialgetrieben 28 und 34. Die Welle 22/3 des Fahrelektromotors 2/3 ist eine koaxial um die Hauptwelle 86 angeordnete Hohlwelle. Ein Getriebe 70/3, welches ein Untersetzungsgetriebe oder ein Schaltgetriebe sein kann, ist ebenfalls koaxial um die Hauptwelle 86 herum angeordnet und verbindet die Welle 22/3 des Fahrantriebsmotors 2/3 über eine hohle Verbindungswelle 104 mit der Hauptwelle 86 und gleichzeitig mit der hydrodynamischen Strömungsbremse 88. Getriebe 70/3 und hydrodynamische Strömungsbremse 88 sind zwischen Fahrelektromotor 2/3 und Lenk elektromotor 4/3 angeordnet. Zwischen diesen beiden Motoren befindet sich auch ein koaxial um die Hauptwelle 86 herum angeordnetes Zahnrad 106, welches einerseits mit der hohlen Welle 72 des Lenkelektromotors 4/3 verbunden ist und andererseits über Zahnräder 108 und 110 mit der Nullwelle 66 antriebsmäßig in Verbindung steht. Der elektrische Generator 12 und der ihn antreibende Verbrennungsmotor 14 sind mit ihrer Welle 68 achsparallel zur Hauptwelle 86 angeordnet. Diese Ausführungsform mit dem koaxial zur Hauptwelle 86 angeordneten Fahrelektromotor 2/3 und Lenkelektromotor 4/3 hat den Vorteil, daß sie sehr kompakt ist und nur wenig Platz benötigt.

Bei den zuvor beschriebenen Ausführungsformen der Erfindung finden zwei Differentialgetriebe 28 und 34 in Form von Planetengetrieben Anwendung. Die im folgenden beschriebenen Ausführungsformen der elektrisch-mechanischen Antriebsanlage nach der Erfindung betreffen Anordnungen mit nur einem Differentialgetriebe. Dieses eine Differentialgetriebe kann wiederum ein Planetenrad-Differentialgetriebe oder, wie als Beispiel dargestellt, ein Kegelrad-Differentialgetriebe sein.

Bei der Ausführungsform nach Fig. 4 wird ein Fahrelektromotor 2/4 und ein Lenkelektromotor 4/4 über eine Steuer- und Regeleinrichtung 6 vom Generator 12 mit elektrischer Energie versorgt, welcher von einem als Dieselmotor ausgebildeten Verbrennungsmotor 14 angetrieben wird. Ein Kegelrad-Differentialgetriebe 120 besteht aus einem drehbar angeordneten Träger 122, zwei im Träger 122 drehbar gelagerten, axial mit Abstand voneinander angeordneten Kegelrädern 124 und 126, und aus zwei mit Abstand axial voneinander angeordneten weiteren Kegelrädern 128 und 130, wobei die Drehachsen der beiden weiteren Kegelräder 128 und 130 rechtwinkelig zu den Drehachsen der erstgenannten beiden Kegelräder 124 und 126 verlaufen, und alle vier Kegelräder in Form einer in sich geschlossenen Räderkette miteinander in Eingriff sind. Der Träger 122 ist koaxial zu seiner Drehachse mit einem Kegel-Zahnrad 132 verbunden, welches mit einem weiteren Kegel-Zahnrad 133 in Eingriff ist und ein Getriebe 70/5 bildet. Das Kegel-Zahnrad 133 ist auf der Welle 22/4 des Fahrelektromotors 2/4 befestigt, so daß dieser den Träger 122 antreibt. Die beiden zueinander axial angeordneten Kegelräder 128 und 130 bilden die Antriebsausgänge des Differentialgetriebes 120 und sind über Ausgangswellen 134 und 136, auf welchen jeweils eine mechanische Fahrzeugbremse 90 angeordnet ist, mit einer Kupplung 92 verbunden. Über die Kupplungen 92 und auf deren Außenseite angeordnete Untersetzungsgetriebe 94 sind die Ausgangswellen 134 und 136 mit Kettenantriebsrädern 48 und 54 lösbar verbunden. Der Träger 122 und sein Zahnrad 132 sind auf der Ausgangswelle 136 drehbar gelagert, und durch eine hydrodynamische Strömungsbremse 88 bremsbar. Die Kegel-Zahnräder 133 und 132 mit der hydrodynamischen Strömungsbremse 88 bilden eine Fahrantriebsverbindung zwischen dem Fahrelektromotor 2/4 und dem Differentialgetriebe 120. Auf der Welle 72/4 des Lenkelektromotors 4/4 ist ein Kegelrad 140 befestigt, welches mit einem Kegelrad 142 in Eingriff ist, welches auf der Ausgangswelle 136 angeordnet und mit ihr fest verbunden ist. Die Zahnräder 140 und 142 bilden zusammen mit einem Wellenabschnitt 144 der Ausgangswelle 136 eine Lenkantriebsverbindung zwischen dem Lenkelektromotor 4/4 und dem Kegelrad 130, welches somit der Antriebsausgang und gleichzeitig das Lenkantriebselement des Differentialgetriebes 120 ist.

Der Fahrelektromotor 2/4 und der Lenkelektromotor 4/4 sind bezüglich ihrer Leistung gleich ausgebildet wie die Elektromotoren 2,2/... und 4,4/... der Ausführungsformen nach den Fig. 1, 2 und 3. Bei Geradeausfahrt läuft jedoch der Lenkelektromotor 4/4 unbelastet synchron mit der Drehzahl des Fahrelektromotors 2/4. Für Kurvenfahrt des Vollkettenfahrzeugs wird die Drehzahl des Lenkelektromotors 4/4 abhängig von der Dreheinstellung des Lenkorgans 10 je nach Kurvenrichtung höher oder tiefer als die Synchrondrehzahl mit dem Fahrelektromotor 2/4 eingestellt und auf dem eingestellten Wert durch Regelung der Steuer- und Regeleinrichtung 6 geregelt.

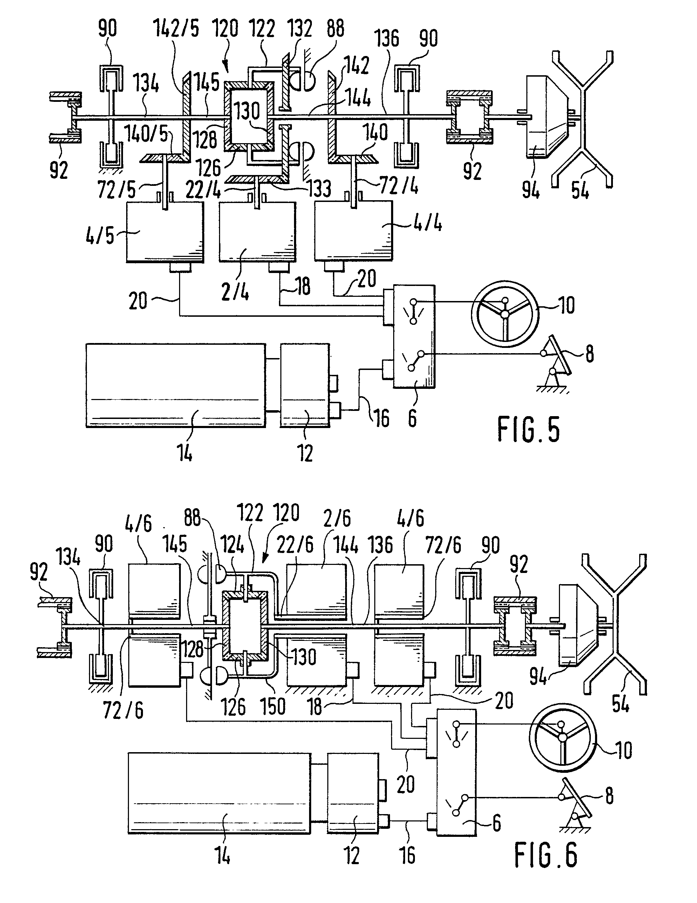

Bei der weiteren Ausführungsform nach Fig. 5 ist zusätzlich zu den Elementen und dem Lenkelektromotor 4/4 von Fig. 4 ein zweiter Lenkelektromotor 4/5 vorgesehen, dessen Welle 72/5 über Kegelräder 140/5 und 142/5 antriebsmäßig mit der in den Zeichnungen links gezeigten Ausgangswelle 134 verbunden ist. Somit wirken ein Fahrelektromotor 2/4 und zwei Lenkelektromotoren 4/4 und 4/5 auf ein Kegelrad-Differentialgetriebe 120. Die Welle 22/4 des Fahrelektromotors 2/4 ist über die Kegel-Zahnräder 132 und 133 in antriebsmäßiger Verbindung mit dem Träger 122 des Differentialgetriebes 120, und die Wellen 72/4 und 72/5 der beiden Lenkelektromotoren 4/4 und 4/5 stehen über Zahnräder 140,142 und 140/5, 142/5 in trieblicher Verbindung mit je einer der beiden Ausgangswellen 136 und 134 des Differentialgetriebes 120. Diese Ausführungsform hat gegenüber den Ausführungsformen nach den Fig. 1 bis 4 den Vorteil, daß die beiden Lenkelektromotoren 4/4 und 4/5 auch gleichzeitig zur Unterstützung des Fahrantriebes mitbenutzt werden können. Deshalb brauchen alle drei Elektromotoren 2/4, 4/4 und 4/5 je nur für eine Dauerleistung von 1/3 und eine Kurzzeitleistung von nur etwa 50% der maximalen Leistung des Verbrennungsmotors 14 ausgebildet zu sein. Der Fahrelektromotor 2/4 wird nur vom Fahrpedal 8, und die beiden Lenkelektromotoren 4/4 und 4/5 sowohl vom Fahrpedal 8 als auch vom Lenkorgan 10, abhängig gesteuert. Das Differentialgetriebe 120, das den Lenkelektromotor 4/4 mit der rechten Ausgangswelle 136 verbindende Getriebe 140, 142, die hydrodynamische Strömungsbremse 88 und die beiden mechanischen Bremsen 90 sind in gleicher Weise angeordnet und wirksam wie bei der Ausführungsform nach Fig. 4. Die Zahnräder 140/5 und 142/5 bilden zusammen mit einem Wellenabschnitt 145 der linken Ausgangswelle 134 eine Lenkantriebsverbindung zwischen dem linken Lenkelektromotor 4/5 und dem linken Kegelrad 128 des Differentialgetriebes 120. Dieses linke Kegelrad 128 ist somit ein Antriebsausgang und gleichzeitig ein Lenkantriebselement des Differentialgetriebes 120.

Die in Fig. 6 dargestellte weitere Ausführungsform der Erfindung arbeitet nach dem gleichen Prinzip wie die Ausführungsform nach Fig. 5. Der Unterschied besteht darin, daß bei der Ausführungsform nach Fig. 6 der Fahrelektromotor 2/6 und die zwei beiden Lenkelektromotoren 4/6 jeweils koaxial zu den Ausgangsdrehachsen des Kegelrad-Differentialgetriebes 120 angeordnet sind. Der Fahrantriebsmotor 2/6 ist koaxial um die Ausgangswelle 136 angeordnet und mit seiner als Hohlwelle ausgebildeten Welle 22/6 mit dem Träger 122 verbunden. Der Lenkelektromotor 4/6 auf der rechten Seite ist ebenfalls koaxial um die Ausgangswelle 136 angeordnet und seine als Hohlwelle ausgebildete Welle 72/6 ist mit der Ausgangswelle 136 verbunden. Dieser Lenkelektromotor 4/6 und der Fahrelektromotor 2/6 sind zwischen dem Differentialgetriebe 122 und der mit der Ausgangswelle 136 zusammenwirkenden, mit Bezug auf Fig. 6 rechts dargestellten, mechanischen Bremse 90 angeordnet, wobei sich der Fahrelektromotor 2/6 zwischen dem Differentialgetriebe 122 und dem Lenkelektromotor 4/6 befindet. Der Lenkelektromotor 4/6 auf der linken Seite ist koaxial zur linken Ausgangswelle 134 zwischen dem Differentialgetriebe 122 und der linken mechanischen Bremse 90 angeordnet. Die Welle 72/6 des linken Lenkelektromotors 4/6 ist als Hohlwelle ausgebildet und mit der linken Ausgangswelle 134 verbunden, welche sich durch die hohle Welle 72/6 hindurch erstreckt. Die hydrodynamische Strömungsbremse 88 wirkt mit dem Träger 122 des Differentialgetriebes 120 zusammen. Die Position der Strömungsbremse 88 wird zweckmäßigerweise so gewählt, daß sie den geringsten Raum benötigt. In Fig. 6 ist die Fahrantriebsverbindung zwischen der hohlen Welle 22/6 des Fahrelektromotors 2/6 und dem Träger 122 des Differentialgetriebes 120 durch ein Anschlußstück 150 gebildet. Das Fahrantriebselement des Differentialgetriebes ist sein Träger 122. Die Lenkantriebsverbindung zwischen dem rechts dargestellten Lenkelektromotor 4/6 und dem Differentialgetriebe 120 ist durch den Abschnitt 144 der Ausgangswelle 136 gebildet, welcher die hohle Welle 72/6 des rechten Lenkelektromotors 4/6 mit dem rechten Kegelrad 130 des Differentialgetriebes 120 verbindet. Das rechte Kegelrad 130 ist somit nicht nur der Antriebsausgang des Differentialgetriebes 120, sondern gleichzeitig auch dessen Lenkantriebselement für den rechten Lenkelektromotor 4/6. Die Lenkantriebsverbindung zwischen dem linken Lenkelektromotor 4/6 und dem Differentialgetriebe 120 ist durch einen Wellenabschnitt 145 der linken Ausgangswelle 134 gegeben, welcher die hohle Welle 72/6 des linken Lenkelektro motors 4/6 mit dem linken Kegelrad 128 des Differentialgetriebes 120 verbindet. Dadurch ist das linke Kegelrad 128 nicht nur der linke Antriebsausgang des Differentialgetriebes 120, sondern gleichzeitig auch dessen Lenkantriebselement.

Alle Ausführungsformen der Erfindung haben den weiteren Vorteil, daß der Verbrennungsmotor 14 dauernd und konstant mit einer Drehzahl laufen kann, welche im günstigsten Brennstoffbereich des Verbrennungsmotors liegt. Ein weiterer Vorteil besteht darin, daß der Fahrelektromotor 2,2/1 bis 2/6 und die Lenkelektromotoren 4, 4/2 bis 4/6 auch zur Erzeugung einer Bremswirkung benutzt werden können, welche die Bremswirkung der mechanischen Bremsen 90 und der hydrodynamischen Bremse 88 unterstützt. Dabei können alle diese Elemente gleichzeitig eine Bremswirkung ausüben, oder nacheinander in Abhängigkeit von einem bestimmten Programm, und die Bremswirkungen der einzelnen Elemente können prozentual in einem bestimmten Verhältnis aufgeteilt sein.

**Ansprüche**

1. Elektrische-mechanische Antriebsanlage für ein Vollkettenfahrzeug, mit
1.1. einem Fahrmotor (2;2/2 bis 2/6),
1.2. mindestens einer Lenkantriebseinheit (4;4/2 bis 4/6),
1.3. einer Differentialgetriebeanordnung (28,34;120),
1.4. einer Fahrantriebsverbindung (22,24,30;22/2 bis 22/6) zwischen dem Fahrmotor (2;2/2 bis 2/6) und einem Fahrantriebselement (26;122) der Differentialgetriebeanordnung (28,34;120),
1.5. einer Lenkantriebsverbindung (72;72/2 bis 72/6) zwischen der Lenkantriebseinheit (4;4/2 bis 4/6) und einem Lenkantriebselement (40;128,130) der Differentialgetriebeanordnung (28,34;120),

1.6. zwei Antriebsausgängen (44;128,130) der Differentialgetriebeanordnung (28,34;120) zum Antrieb von Kettenantriebsrädern (48,54) des Vollkettenfahrzeuges,
**dadurch gekennzeichnet,**
daß der Fahrmotor (2;2/2 bis 2/6) ein Elektromotor ist, daß die Lenkantriebseinheit (4;4/2 bis 4/6) ein Elektromotor ist, und daß der Fahrelektromotor (2;2/2 bis 2/6) und der Lenkelektromotor (4;4/2 bis 4/6) von einem elektrischen Generator (12), der von einem Verbrennungsmotor (14) antreibbar ist, mit elektrischer Energie versorgbar sind.

2. Antriebsanlage nach Anspruch 1,
**dadurch gekennzeichnet,**
daß die Differentialgetriebeanordnung aus zwei Differentialgetrieben (28,34) besteht, von welchen jedes je einen der Antriebsausgänge (44), ein Fahrantriebselement (26) und ein Lenkantriebselement (40) aufweist, daß für beide Differentialgetriebe (28,34) ein gemeinsamer Fahrelektromotor (2;2/2;2/3) vorgesehen ist, der über die Fahrantriebsverbindung (22;22/2;22/3) mit den Fahrantriebselementen (26) der beiden Differentialgetriebe (28,34) antriebsmäßig verbunden ist, und daß für beide Differentialgetriebe (28,34) ein gemeinsamer Lenkelektromotor (4;4/2;4/3) vorgesehen ist, der mit den Lenkantriebselementen (40) der beiden Differentialgetriebe antriebsmäßig verbunden ist (Fig. 1,2 und 3).

3. Antriebsanlage nach Anspruch 1,
**dadurch gekennzeichnet,**
daß die Differentialgetriebeanordnung aus einem einzigen Differentialgetriebe (120) besteht, welches das Fahrantriebselement (122) und die beiden Antriebsausgänge (128,130) aufweist, und daß einer (130) der beiden Antriebsausgänge (128,130) auch als Lenkantriebselement dient, indem er über die Lenkantriebsverbindung (72/4,144,142,140 in Fig. 4 und 5; 72/6, 144 in Fig. 6) mit dem Lenkelektromotor (4/4;4/6) antriebsmäßig verbunden ist (Fig. 4, 5 und 6).

4. Antriebsanlage nach Anspruch 3,
**dadurch gekennzeichnet,**
daß der andere Antriebsausgang (128) des Differentialgetriebes (120) als zweites Lenkantriebselement dient, indem dieser andere Ausgang (128) über eine zweite Lenkantriebsverbindung (72/5,140/5,142/5,145 in Fig. 5; 72/6, 145 in Fig. 6) mit einem zweiten Lenkelektromotor (4/5;4/6) antriebsmäßig verbunden ist (Fig. 5 und 6).

5. Antriebsanlage nach einem der Ansprüche 1 bis 4,
**dadurch gekennzeichnet,**
daß der Fahrelektromotor (2;2/3;2/6) koaxial zu einer Welle (24,30;86;136) angeordnet ist, welche axial zur Drehachse der Antriebsausgänge (44 in Fig. 1 und 3; 128,130 in Fig. 6) der Differentialgetriebeanordnung (28,34;120) verläuft (Fig. 1,3 und 6).

6. Antriebsanlage nach Anspruch 5,

**dadurch gekennzeichnet,**

daß der Lenkelektromotor (4/3; 4/6) zur gleichen Welle (86 in Fig. 3; 136 in Fig. 6) koaxial angeordnet ist wie der Fahrelektromotor (2/3;2/6).

7. Antriebsanlage nach Anspruch 2,

**dadurch gekennzeichnet,**

daß der Lenkelektromotor (4) koaxial zu einer Nullwelle (66) angeordnet ist, welche ein Bestandteil der Lenkantriebsverbindung (72) zwischen dem Lenkelektromotor (4) und den beiden Differentialgetrieben (28,34) ist (Fig. 1).

8. Antriebsanlage nach einem der Ansprüche 1 bis 7,

**dadurch gekennzeichnet,**

daß zur Erzeugung einer Bremswirkung an den Antriebsausgängen (44;128,130) sowohl mechanische Bremsen (90) als auch mindestens eine hydrodynamische Bremse (88) vorgesehen sind.

9. Antriebsanlage nach einem der Ansprüche 1 bis 8,

**dadurch gekennzeichnet,**

daß die Fahrantriebsverbindung zwischen dem Fahrelektromotor (2;2/3) und der Differentialgetriebeanordnung (28,34) ein Gangschaltgetriebe (70;70/3) enthält.

FIG.1

FIG.2

EP 0 304 594 A2

FIG.3

FIG.4

EP 0 304 594 A2

FIG.5

FIG.6